(19) Europäisches Patentamt
European Patent Office
Office européen des brevets

(11) EP 4 488 342 B1

(12) EUROPEAN PATENT SPECIFICATION

(45) Date of publication and mention of the grant of the patent:
**08.04.2026 Bulletin 2026/15**

(21) Application number: **24192751.6**

(22) Date of filing: **10.02.2022**

(51) International Patent Classification (IPC):
***C09D 11/101*** (2014.01) ***C09D 11/322*** (2014.01)
***C09D 11/38*** (2014.01) ***C09D 11/40*** (2014.01)

(52) Cooperative Patent Classification (CPC):
**C09D 11/101; C09D 11/322; C09D 11/38; C09D 11/40**

(54) **FREE RADICAL CURABLE INKJET INKS AND INKJET PRINTING METHODS**

DURCH FREIE RADIKALE HÄRTBARE TINTENSTRAHLTINTEN UND TINTENSTRAHLDRUCKVERFAHREN

ENCRES POUR JET D'ENCRE DURCISSABLES PAR RADICAUX LIBRES ET PROCÉDÉS D'IMPRESSION PAR JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2025 Bulletin 2025/02**

(62) Document number(s) of the earlier application(s) in accordance with Art. 76 EPC:
**22156096.4 / 4 227 373**

(73) Proprietor: **AGFA NV**
**2640 Mortsel (BE)**

(72) Inventors:
- **WAUMANS, Bart**
  **2640 Mortsel (BE)**
- **LIEVENS, Els**
  **2640 Mortsel (BE)**

(74) Representative: **Strijckers, Hans Louis P.**
**AGFA NV**
**Intellectual Property Department**
**Septestraat 27**
**2640 Mortsel (BE)**

(56) References cited:
**EP-A1- 2 412 769 EP-A1- 2 749 610**
**EP-A1- 3 412 738 EP-A2- 2 813 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The present invention relates to free radical curable inkjet inks, preferably UV curable inkjet inks, and inkjet printing methods therewith especially for manufacturing signs, such as traffic signs, guidance signs and signs for construction zones.

### Background Art

Signs are commonly used along roads to display information to vehicle drivers and pedestrians. Traffic signs convey information for traffic control purposes, for example, a stop sign, a speed limit sign, a railway crossing sign,... Guidance signs direct the road users along streets and highways, inform them of intersecting routes, direct them to cities or other important destinations, identify nearby rivers, forests, and historical sites, and generally give such information to help them along their way in the simplest way.

Traditionally screen printing has been used to manufacture traffic control and guidance signs. However, screen printing unique guidance signs is costly and inefficient because a separate screen needs to be made for each individual sign.

Inkjet printing systems have now proven their reliability in an industrial environment and are being incorporated in production lines for signs. Although their flexibility in use, such as variable data printing making unique signs possible, has led to an economical and efficient production, the print result with radiation curable inkjet inks still needs further improvements compared to screen printing inks.

One aspect for improvement of the inkjet inks is their reflectivity, which for an unknown reason appears to be worse than screen printing inks. Many signs include an optically active (e.g. retroreflective) substrate that has characters or images printed thereon. The characters or images provide information that is of interest to the vehicle drivers or pedestrians, while the retroreflective substrate allows the information to be vividly displayed at night. The term "retroreflective" refers to the property of reflecting an obliquely incident light ray in a direction antiparallel to its incident direction, such that it returns to the light source or the immediate vicinity thereof. Light from motor vehicle headlamps is retroreflected by the signs, allowing the information to be read more easily by passing motorists and pedestrians.

Another aspect for improvement of the free radical curable inkjet inks is the adhesion to these substrates. The adhesion of the inkjet ink on road signs suffers from large temperature differences between hot summers and cold winters. Several approaches for improving the adhesion have been suggested in the literature.

One approach is to modify the polymerizable composition. In EP 1697471 A (VUTEK) discloses a radiation curable inkjet ink comprising: a) a first curable component that is present in the ink composition in an amount greater than 30 weight percent, has a functionality that is greater than 2 and a molecular weight in the range of from about 400 g/mole to about 10,000 g/mole; b) a second curable component that has a functionality that is less than or equal to 2; c) an initiator component; and d) a nonreactive solvent that is present in the ink composition in an amount in the range of from about 5 to about 7 weight percent. It has been observed that improved adhesion often results in decreased reflectivity and also that the use of organic solvents results in a decreased printing reliability, which is important in an industrial environment.

Another approach suggests the addition of a specific adhesion promoting component to the polymerizable composition. In EP 1355999 A (3M) , the polymerizable composition contains an adhesion promoting, radiation curable component comprising one or more heterocyclic, radiation curable monomer and/or an alkoxylated monomer comprising pendant alkoxylated functionality and no main chain alkoxylated functionality.

Other approaches modify the substrate to be printed on, rather than the inkjet ink. EP 1316434 A (TRIP INDUSTRIES) discloses a process for making weather proof and chemical-resistant outdoor signs wherein an ink-receptive receiving surface is applied on a retroreflective substrate for being absorbent towards the inkjet ink, which may also be a UV curable inkjet ink. Although such a treatment may be advantageous in promoting adhesion it complicates the manufacturing process of the signs. Additionally, EP3412738 might be cited as prior art.

Despite all the suggested approaches, there still remains a need for free radical curable inkjet inks exhibiting good adhesion and retroreflectivity, and also reliable inkjet printing methods therewith.

### Summary of invention

In order to overcome the problems described above, preferred embodiments of the present invention have been realized with a free radical curable inkjet ink as defined in claim 1.

It was surprisingly found that by including in the free radical curable inkjet ink a mixture of colour pigments including at least one colour pigment selected from a quinacridone pigment, a diketopyrrolo pyrrole pigment, and a mixed crystal thereof; and in addition also controlling the average particle size of the colour pigment and the double bond density

DBD in a certain range that excellent results were obtained for light stability, image quality, and retroreflectivity.

The free radical curable inkjet ink can be advantageously used for making traffic signs, guidance signs and the like.

These and other objectives will become apparent from the detailed description hereinafter.

Description of embodiments

Definitions

The term "radiation curable", as used in radiation curable inkjet ink means that the inkjet ink is curable by actinic radiation, such as UV radiation and e-beam, preferably UV radiation. The latter inkjet inks are also referred to as UV curable inkjet inks.

The term "monofunctional", as used in monofunctional polymerizable compounds means polymerizable compounds containing a single polymerizable group.

The term "polyfunctional", as used in polyfunctional polymerizable compounds means polymerizable compounds containing two, three or more polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Free radical Curable Inkjet Inks

A free radical inkjet ink in a preferred embodiment of the invention contains a colour pigment and a polymerizable composition, wherein the colour pigment is a mixture of colour pigments including at least one colour pigment selected from a quinacridone pigment, a diketopyrrolo pyrrole pigment, and a mixed crystal thereof; wherein the average particle size of the colour pigment is between 80 nm and 240 nm as determined by a dynamic light scattering technique using a laser having an emission wavelength of 635 nm; wherein the polymerizable composition contains 95.0 to 99.0 wt% of monofunctional polymerizable compounds; and wherein the polymerizable composition has a double bond density DBD of at least 5.40 with the double bond density DBD being calculated by the formula:

$$\mathbf{DBD} = \frac{\sum_{\mathbf{i}=1\ \mathbf{to}\ \mathbf{n}}^{\mathbf{n}} \frac{\mathbf{F(i)} \times \mathbf{wt\%(i)}}{\mathbf{MW(i)}}}{\sum_{\mathbf{i}=1\ \mathbf{to}\ \mathbf{n}}^{\mathbf{n}} \mathbf{wt\%(i)}}$$

with:

n representing the number of polymerizable compounds in the free radical curable inkjet ink; F(i) representing the functionality of the polymerizable compound i; MW(i) representing the molecular weight of the polymerizable compound i; and wt%(i) being the weight percentage of the polymerizable compound i based on the total weight of the polymerizable composition.

In a preferred embodiment of the free radical curable inkjet ink, the mixture of colour pigments in the inkjet ink contains a beta-copper phthalocyanine pigment. This combination with a quinacridone pigment, a diketopyrrolo pyrrole pigment, or a mixed crystal thereof provides especially blue, brown and black free radical curable inkjet inks that exhibit good light stability and retroreflectivity.

In a preferred embodiment of the free radical curable inkjet ink, the mixture of colour pigments in the inkjet ink contains a C.I. Pigment Yellow 150 pigment. This combination with a quinacridone pigment, a diketopyrrolo pyrrole pigment, or a mixed crystal thereof provides especially yellow and brown free radical curable inkjet inks that exhibit good light stability and retroreflectivity.

The at least one colour pigment selected from a quinacridone pigment, a diketopyrrolo pyrrole pigment, and a mixed crystal thereof is preferably present in an amount of at least 9 wt% based on the total weight of the mixture of colour pigments.

The polymerizable composition has a double bond density DBD of at least 5.40, preferably at least 5.60 and most preferably at least 5.70. A higher double bond density DBD generally improves the retroreflectivity.

The radiation curable inkjet inks are curable by free radical polymerization. It was found that free radical polymerization provided a higher reliability in the inkjet printing process over cationically curable inkjet inks that posed problems of jetting reliability due to UV stray light. UV stray light hitting the nozzle plate of an inkjet print head results into failing nozzles due to clogging by cured ink in the nozzle. Unlike free radical curable ink where radical species have a much shorter lifetime, a cationic curable ink continues to cure once an acid species has been generated by UV light in the nozzle.

Free radical Curable Inkjet Ink sets and Colour Pigments

A free radical curable inkjet ink set in accordance with the inventions includes a plurality of free radical curable inkjet inks as described above. The plurality of free radical curable inkjet inks contains at least one free radical curable inkjet ink selected from the group consisting of a blue ink, a red ink and a brown ink. While in general CMYK inkjet ink sets are used for producing multicolour images, it was found that a BRYKGBr inkjet ink set offered advantages in image quality and manufacturing speed for the manufacturing of traffic signs.

As traffic signs are used outdoor, colour pigments are used instead of dyes because they exhibit a higher stability against light fading.

The exact colour shades to be used for road signs in a certain country is defined by the national regulation and these tend to differ somewhat from country to country. For example, the blue background used in motorway road signs of Austria, Belgium and Portugal is of a quite different blue shade. For the same traffic sign, e.g. a priority road sign, different shades from flashy yellow to dark orange are used in different countries. Although it is possible to reproduce all these colour shades by using a BRYKGBr inkjet ink set wherein the inkjet inks contain a single specific colour pigment, it was found in the present invention that also the resistance against light fading, retroreflectivity and image quality could be optimized by using a mixture of colour pigments in most inkjet inks of the ink set. This mixture of colour pigments includes at least one colour pigment selected from a quinacridone pigment, a diketopyrrolo pyrrole pigment, and a mixed crystal. Also for the green ink, a combination of a beta-copper phthalocyanine and a specific yellow pigment provided an improved light stability versus the commercially available green pigments.

A preferred BRYKGBr inkjet ink set for the manufacturing of traffic signs is shown by Table 1. The weight percentage of the pigments is based on the total weight of the inkjet ink. The mixed crystal preferably contains C.I. Pigment Violet 19 present in the mixed crystal in an amount between 70 and 95 % as measured by Probe-MS. The first four rows in the table are all colour pigments selected from the group consisting a quinacridone pigment, a diketopyrrolo pyrrole pigment, and a mixed crystal thereof.

Table 1

| **wt% of pigment:** | **Inkjet Inks** | | | | | |
|---|---|---|---|---|---|---|
| | **Blue** | **Red** | **Yellow** | **Black** | **Green** | **Brown** |
| **C.I Pigment Violet 19** | | 1.06 | | | | |
| **C.I Pigment Red 122** | | 1.06 | | | | |
| **Mixed crystal** | 0.36 | | | 0.14 | | 1.27 |
| **C.I Pigment Orange 71** | | 1.77 | 0.40 | | | |
| **C.I Pigment Blue 15:4** | 2.98 | | | 0.22 | 1.55 | 0.14 |
| **C.I Pigment Yellow 150** | | | 1.27 | | 0.57 | 1.95 |
| **C.I Pigment Black 7** | | | | 1.30 | | |

The colour pigments may be black, cyan, magenta, yellow, red, orange, violet, blue, green, brown, and the like. Suitable colour pigments may be chosen from those disclosed by HERBST, Willy, et al. Industrial Organic Pigments, Production, Properties, Applications. 3rd edition. Wiley - VCH , 2004. ISBN 3527305769.

A particularly preferred quinacridone pigment is C.I. Pigment Violet 19 or a mixed crystal thereof. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta RT-355-D from Ciba Specialty Chemicals.

For a black ink, the pigment C.I. Pigment Black 7 and C.I. Pigment Black 11 are preferred. Suitable carbon black pigments include Regal™ 400R, Mogul™ L, Elftex™ 320 from CABOT, or Carbon Black FW18, Special Black™ 250, Special Black™ 350, Special Black™ 550, Printex™ 25, Printex™ 35, Printex™ 55, Printex™ 90, Printex™ 150T from EVONIK and MA8 from MITSUBISHI CHEMICAL Co..

Although a carbon black pigment provides excellent resistance against light fading, an improved image quality was obtained by combining it with at least one colour pigment selected from a quinacridone pigment, a diketopyrrolo

pyrrole pigment, and a mixed crystal, more preferably further in combination with a beta-copper phthalocyanine pigment. Such a combination provides a neutral black colour, while an inkjet ink containing only a carbon black often only produces brownish black colours.

In a particularly preferred embodiment, an inkjet ink in accordance with the invention contain two or more pigments selected from the group consisting of C.I. Pigment Violet 19, C.I. Pigment Red 122, a mixed crystal including a quinacridone, C.I. Pigment Orange 71, C.I Pigment Yellow 150, a beta-copper phthalocyanine and a carbon black.

The free radical curable inkjet ink set according to a preferred embodiment includes a) a blue free radical curable inkjet ink containing a beta-copper phthalocyanine pigment and at least one colour pigment selected from a quinacridone pigment, a diketopyrrolo pyrrole pigment, and a mixed crystal thereof; b) a red free radical curable inkjet ink containing a mixture of colour pigments selected from a quinacridone pigment, a diketopyrrolo pyrrole pigment, and a mixed crystal thereof; c) a yellow free radical curable inkjet ink containing a C.I. Pigment Yellow 150 pigment; d) a black free radical curable inkjet ink containing a carbon black pigment; e) a brown free radical curable inkjet ink containing a beta-copper phthalocyanine pigment and at least one colour pigment selected from a quinacridone pigment, a diketopyrrolo pyrrole pigment, and a mixed crystal thereof; and
f) a green free radical curable inkjet ink.

In a more preferred embodiment of the above free radical curable inkjet ink set, the yellow and/or the black free radical curable inkjet ink contains at least one colour pigment selected from a quinacridone pigment, a diketopyrrolo pyrrole pigment, and a mixed crystal thereof; and/or the green and/or the brown free radical curable inkjet ink contains a C.I. Pigment Yellow 150 pigment.

The average particle size of the colour pigment is between 80 nm and 240 nm, preferably between 100 and 200 nm, as determined by a dynamic light scattering technique using a laser diode having an emission wavelength of 635 nm. Insufficient light stability is obtained when the average particle size is smaller than 80 nm. If the average particle size is larger than 240 nm, then the retroreflectivity is reduced. An optimal compromise of light stability and retroreflectivity is obtained if the average particle size of the colour pigment is between 100 and 200 nm.

The pigment is preferably used in an inkjet ink in an amount of 1.0 to 8.0 wt%, more preferably 1.5 to 6.0 wt% based on the total weight of the free radical curable inkjet ink. In these concentration ranges a higher throughput can be obtained in manufacturing the road signs without impairing image quality (graininess).

## Dispersants

The pigmented free radical curable inkjet ink preferably contains a dispersant in order to further improve pigment dispersion properties. For obtaining high printing reliability, the dispersant is preferably a polymeric dispersant. Such dispersant improves the reliability of the inkjet printing process due to a generally smaller sedimentation speed, especially when they contain secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from LUBRIZOL;
- TEGO™ DISPERS™ dispersants from EVONIK;

- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF, Disperbyk™ dispersants from BYK CHEMIE GMBH, and Ajisper™ dispersants from AJINOMOTO FINE-TECHNO Co. Particularly preferred dispersants are Solsperse™ 32000, 35000 and 39000 dispersants from LUBRIZOL and Disperbyk™ 162 from BYK CHEMIE GMBH.
The dispersants may be used alone or in combination of two or more kinds thereof.
The polymeric dispersant is preferably used in an amount of 10 to 200 wt%, more preferably 20 to 100 wt%, most preferably 50 to 90 wt% based on the weight of the pigment.

Dispersion Synergists

The free radical curable inkjet ink may include a dispersion synergist to further improve the dispersion stability by a polymeric dispersant and thus also the printing reliability as less pigment can sediment in the nozzle of a print head upon stand-by of an inkjet device.
A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.
The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.
Suitable dispersion synergists that are commercially available include Solsperse™ 5000 and Solsperse™ 22000 from LUBRIZOL.
Suitable dispersion synergists for a diketopyrrolo-pyrrole pigment, a quinacridone pigment or a mixed crystal thereof include those disclosed in EP 1790698 A (AGFA GRAPHICS) , EP 1790696 A (AGFA GRAPHICS) , WO 2007/060255 (AGFA GRAPHICS) and EP 1790695 A (AGFA GRAPHICS) .
In dispersing C.I. Pigment Blue 15:3, the use of a sulfonated Cu-phthalocyanine dispersion synergist, e.g. Solsperse™ 5000 from LUBRIZOL is preferred.

Polymerizable Compositions

Any monomer and oligomer capable of free radical polymerization may be used as polymerizable compound in the polymerizable composition. The viscosity of the free radical curable inkjet ink can be adjusted by varying the ratio between monomers and oligomers.
The polymerizable compounds may be any monomer and/or oligomer found in the Polymer Handbook Vol 1 + 2, 4th edition, edited by J. BRANDRUP et al., Wiley-Interscience, 1999 .
The polymerizable composition contains a mixture of monofunctional and polyfunctional, preferably difunctional, polymerizable compounds.
The monofunctional polymerizable compound has to be present in a dominant way. The polymerizable composition preferably also includes a plurality of monofunctional polymerizable compounds.
By using multiple monofunctional polymerizable compounds, the adhesion and retroreflectivity can generally be maximized for a certain amount of monofunctional polymerizable compounds in the free radical curable inkjet ink. However, in such a maximalization, certain monofunctional polymerizable compounds are less preferred, while others are more preferred. In a particularly preferred embodiment, the polymerizable composition preferably contains 0 to 18.0 wt% of isobornyl acrylate and/or preferably at least 13.0 wt% of a non-aromatic heterocyclic monofunctional monomer based on the total weight of the inkjet ink.
The mixture of monofunctional polymerizable compounds also allows to accurately control the viscosity of the free radical curable inkjet ink.
The polymerizable composition contains 95.0 to 99.0 wt% and more preferably 96.0 to 98.5 wt% of monofunctional polymerizable compounds based on the total weight of the polymerizable composition.
Preferred non-aromatic heterocyclic monofunctional monomers include N-vinyl caprolactam, acryloyl morpholine, cyclic trimethylolpropane formal acrylate and vinyl methyl oxazolidinone. In a particularly preferred embodiment, the free radical curable inkjet ink contains cyclic trimethylolpropane formal acrylate and/or vinyl methyl oxazolidinone.

The above non-aromatic heterocyclic monofunctional monomer(s) is preferably combined with an aromatic monofunctional monomer, preferably not a heteroaromatic monomer and most preferably 2-phenoxyethyl acrylate. The aromatic monofunctional monomer, preferably consisting of 2-phenoxyethyl acrylate, is preferably present in an amount of 15.0 to 30.0 wt% based on the total weight of the inkjet ink.

Photoinitiating System

If no electron beam curing is employed for curing the free radical curable inkjet ink, a photoinitiating system is used. The photoinitiating system preferably contains at least one free radical photoinitiator, but preferably contains a combination of photoinitiators and preferably also one or more co-initiators.

The photoinitiator in the free radical curable inkjet ink may be a Norrish type I initiator or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator. Both type I and type II photoinitiators can be used in the present invention, alone or in combination.

The photoinitiating system preferably includes 4 to 20 wt% of free radical photoinitiators and co-initiators.

Norrish Type I Photoinitiators

Preferred Norrish Type I photoinitiators for the UV curable inkjet ink of the invention are acylphosphine oxide and α-hydroxy ketone photoinitiators.

An acylphosphine oxide photoinitiator is particularly advantageous for curability when UV curing is performed with UV LEDs having a long wavelength of more than 360 nm, and even more when the acylphosphine oxide photoinitiator is further combined with a Norrish Type II photoinitiator containing a thioxanthone group.

Preferred examples of the acylphosphine oxide photoinitiators include, but are not particularly limited to, a bis(2,4,6-trimethylbenzoyl)-phenyl phosphine oxide, a 2,4,6-trimethylbenzoyl-diphenyl-phosphine oxide, and a bis-(2,6-dimethoxybenzoyl)-2,4,4-trimethylpentyl phosphine oxide.

Preferred commercially available acylphosphine oxide photoinitiators include, but are not particularly limited to, Omnirad™ 819 (bis(2,4,6-trimethyl benzoyl)-phenyl phosphine oxide), Omnipol™ TP, Omnirad™ TPO (2,4,6-trimethyl benzoyl-diphenyl-phosphine oxide), Omnirad™ TPO-L (Ethyl (2,4,6-trimethylbenzoyl) phenyl phosphinate), all available from IGM RESINS.

The content of the acylphosphine oxide photoinitiator is preferably 3 to 15 wt%, more preferably 5 to 13 wt%, and still more preferably 6 to 10 wt% based on the total weight of the UV curable inkjet ink.

The free radical curable inkjet ink preferably includes at least 7.0 wt% of an acylphosphine oxide photoinitiator based on the total weight of the free radical curable inkjet ink. Such an amount ensures especially good UV LED curing reliability and curability when UV curing is performed with UV LEDs having a wavelength of more than 360 nm.

Examples of the α-hydroxy ketone photoinitiators include, but are not particularly limited to, 1-hydroxycyclohexyl phenyl ketone, 2-hydroxy-2-methyl-1-phenyl propane-1-one and 1-[4-(2-hydroxyethoxy)-phenyl]2-hydroxy-2-methyl-1-propane-1-on.

Examples of commercially α-hydroxy ketone photoinitiators include, but are not particularly limited to, Omnirad™ 1173, Omnirad™ 184 and Omnirad™ 127 and Omnirad™ 4817 from IGM RESINS.

The content of the α-hydroxy ketone is preferably 1 to 10 wt%, more preferably 2 to 8 wt%, and still more preferably 3 to 6 wt% based on the total weight of the UV curable inkjet ink.

In a preferred embodiment, the one or more acyl groups of the acylphosphine oxide photoinitiator or α-hydroxy ketone photoinitiator are connected to a polymer or to a polymerizable group.

Suitable polymeric acylphosphine oxide photoinitiators are disclosed in **EP 2960303** A (FUJIFILM) .

An example of a suitable polymeric α-hydroxy ketone photoinitiator is available as Esacure™ KIP150 from IGM RESINS.

Suitable polymerizable α-hydroxy ketone photoinitiators are disclosed in US 4922004 (MERCK) , such as 4-(2-acryloyloxyethoxy)-phenyl 2-acryloyloxy-2-propyl ketone prepared in Example 3.

Norrish Type II photoinitiators

The free radical curable inkjet ink may also contain a Norrish Type II photoinitiator preferably including a photoinitiating moiety selected from the group consisting of a thioxanthone group and a benzophenone group. A Norrish Type II photoinitiator containing a thioxanthone group is particularly preferred as it is advantageous for UV LED curing, especially for UV LEDs having an emission wavelength of at least 360 nm or even 370 nm.

Suitable examples of Norrish Type II photoinitiators containing a thioxanthone group include, but are not particularly limited to, thioxanthone; diethylthioxanthone, such as 2,4-diethylthioxanthone; isopropylthioxanthone, such as 2-isopropylthioxanthone and 4-isopropylthioxanthone; and chlorothioxanthone, such as 2-chlorothioxanthone.

Specific examples of commercially available Norrish Type II photoinitiators containing a thioxanthone group are Speedcure™ DETX (2,4-diethylthioxanthone) and Speedcure™ ITX (2-isopropylthioxanthone) from LAMBSON and Kayacure™ DETX-S (2,4-diethylthioxanthone) from Nippon Kayaku Co..

Suitable examples of Norrish Type II photoinitiators containing a benzophenone group include, but are not particularly limited to, benzophenone; methylbenzophenone; methyl-2-benzoylbenzoate, phenylbenzophenone, such as 4-phenylbenzophenone; trimethylbenzophenone; bis(alkylamino)benzophenone; and 4-(dialkylamino)benzophenone.

Specific examples of commercially available Norrish Type II photoinitiators containing a benzophenone group are Omnirad™ 4MBZ and Omnirad™ BP from IGM RESINS, Speedcure™ PBZ and Speedcure™ 5040 from LAMBSON. The latter is a mixture of benzophenone and thioxanthone.

The content of the Norrish Type II photoinitiator including a photoinitiating moiety preferably selected from the group consisting of a thioxanthone group and a benzophenone group is preferably 0.5 to 7.5 wt%, more preferably 1 to 5 wt% based on the total weight of the UV curable inkjet ink. However, if the Norrish Type II photoinitiator is a polymerizable or a polymeric thioxanthone compound, the content may be higher, preferably up to 25 wt%, more preferably up to 15 wt% based on the total weight of the UV curable inkjet ink.

Preferred examples of polymerizable Norrish Type II photoinitiators including a photoinitiating moiety selected from the group consisting of a thioxanthone group or a benzophenone group are disclosed in EP 2161264 A (AGFA) , EP 2199273 A (AGFA) and EP 2684876 A (AGFA) .

Preferred examples of polymeric Norrish Type II photoinitiators including a photoinitiating moiety selected from the group consisting of a thioxanthone group or a benzophenone group are disclosed in EP 1616920 A (AGFA) and EP 1616899 A (AGFA) .

Commercial examples of polymeric thioxanthones and benzophenones include Omnipol™ BP, Omnipol™ TX, and Omnipol™ 2702 from IGM RESINS.

<u>Co-initiators</u>

In order to increase the photosensitivity further, the free radical curable inkjet ink may additionally contain one or more co-initiators, also called polymerization synergists, for which usually amine synergists are used.

Suitable examples of amine synergists can be categorized in three groups:

1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

In a preferred embodiment of the free radical curable inkjet ink, the polymerization synergist is an acrylated amine synergist.

Suitable amine synergists are commercially available as Omnipol™ ASA, Omnipol™ 894 and Esacure™ A198 from IGM Resins.

Preferred commercial acrylated amine synergists include Photomer™ 4068, 4250, 4771, 4775, 4780, 4967 and 5006 from IGM Resins.

<u>Polymerization Inhibitors</u>

The free radical curable inkjet ink may also contain a polymerization inhibitor. Due to the fact that an ink contains the polymerization inhibitor, a polymerization reaction before curing, e.g. during storage or transport, can be prevented. It also improves the printing reliability, since the UV LED free radical curable inkjet ink in a print head of an inkjet device is usually kept at a higher temperature such as 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

A preferred polymerization inhibitor is Irgastab™ UV10 from BASF. Other examples of polymerization inhibitor include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably present in an amount of 0.1 to 5 wt% based on the total weight of the free radical curable inkjet ink. Below 0.1 wt%, the undesired polymerization is insufficiently inhibited and above 5 wt% the curing speed is heavily reduced.

## Surfactants

The free radical curable inkjet ink may contain a surfactant. The surfactant can be anionic, cationic, non-ionic, or zwitter-ionic. The surfactant is preferably present in an amount of 0.1 to 3 wt% based on the total weight of the free radical curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the free radical curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie and Tegoglide™ 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500, BYK™ UV3510 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, Tego™ Rad 2700, and Tego™ RC711 all manufactured by EVONIK. Another preferred silicone is Silwet™ L7500 from OSI SPECIALITIES BENELUX NV; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer® surfactants from SILTECH CORPORATION, such as Silmer® ACR Di-1508.

## Preparation of Free Radical Curable Inkjet Inks

The preparation of free radical curable inkjet inks is well-known to the skilled person.

The average particle size and distribution of a colour pigment is an important feature for inkjet inks. The inkjet ink may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is performed with cooling to prevent build-up of heat and as much as possible under light conditions in which actinic radiation has been substantially excluded.

The inkjet ink may contain more than one pigment, and may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 5 to 50 wt%, excluding the milling media. The weight ratio of pigment over polymeric dispersant is preferably 20:1 to 1:2, more preferably 2:1 to 1:1.

The optimal milling time can vary and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general, it is desirable to make the Inkjet inks in the form of a concentrated pigment dispersion, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for a particular application.

## Inkjet Printing Methods

An inkjet printing method in accordance with the invention preferably comprising the steps of: a) jetting a colour image with a free radical curable inkjet ink on a substrate; and c) curing the jetted colour image by electron beam or by employing UV light emitting diodes; wherein the free radical curable inkjet ink contains a colour pigment and a polymerizable composition; wherein the colour pigment is a mixture of colour pigments including at least one colour pigment selected from a quinacridone pigment, a diketopyrrolo pyrrole pigment, and a mixed crystal thereof; wherein the average particle size of the colour pigment is between 80 nm and 240 nm as determined by a dynamic light scattering technique using a laser having an emission wavelength of 635 nm; wherein the polymerizable composition contains 95.0 to 99.0 wt% of monofunctional polymerizable compounds; and wherein the polymerizable composition has a double bond density DBD of at least 5.40 with the double bond density DBD being calculated by the formula:

$$\mathbf{DBD} = \frac{\sum_{i=1 \text{ to } n}^{n} \frac{F(i) \times wt\%(i)}{MW(i)}}{\sum_{i=1 \text{ to } n}^{n} wt\%(i)}$$

with:

n representing the number of polymerizable compounds in the free radical curable inkjet ink; F(i) representing the functionality of the polymerizable compound i; MW(i) representing the molecular weight of the polymerizable compound i; and wt%(i) being the weight percentage of the polymerizable compound i based on the total weight of the polymerizable composition.

In a particularly preferred embodiment, there is UV curing delay of at least 1.0 second, more preferably at least 1.5 second and most preferably at least 2.0 seconds after jetting a droplet of the free radical curable inkjet ink. By having such curing delays, the retroreflectivity can be further improved.

The UV curing is preferably performed by UV LEDs having an emission wavelength larger than 360 nm, preferably larger than 370 nm.

The free radical curable inkjet ink is by one more print heads ejecting small droplets in a controlled manner through nozzles onto a substrate moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink. When the voltage is again removed, the ceramic expands to its original shape, ejecting a drop of ink from the print head. Piezoelectric print heads have proven to be the most reliable print

heads in industrial printing

A preferred piezoelectric print head is a so called push mode type piezoelectric print head, which has a rather large piezo-element capable of ejecting also high viscous inkjet ink droplets. Such a print head is available from RICOH as the GEN5s print head.

A preferred piezoelectric print head is a so-called through-flow piezoelectric drop-on-demand print head. Such a print head is available from TOSHIBA TEC as the CF1ou print head. Through-flow print heads are preferred because they enhance the reliability of inkjet printing due to th ink circulation within the print head.

The inkjet print head preferably scans back and forth in a transversal direction across the moving ink-receiver surface. The inkjet print head amy not print on the way back, but bi-directional printing is preferred for obtaining a high areal throughput. For maximizing high areal throughput, another printing method may be used that is known as a "single pass printing process", which can be performed by using page wide inkjet print heads or multiple staggered inkjet print heads that cover the entire width of the ink-receiver surface. In a single pass printing process the inkjet print heads usually remain stationary and the ink-receiver surface is transported under the inkjet print heads.

However, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

For facilitating curing, the inkjet printer may include one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

## Substrates

There is no real limitation on the type of substrate for inkjet printing the free radical curable inkjet ink of the invention on. The substrate may be rigid, but the inkjet ink of the invention can be advantageously used on flexible substrates. The substrate may also be primed or pre-treated, e.g. by corona, plasma or flame treatment

In a particularly preferred embodiment, the substrate is preferably a reflective substrate, more preferably a retroreflective substrate.

In a particularly preferred embodiment, the substrate is preferably selected from the group consisting of retroreflective substrates having a prismatic air-backed or metalized construction and retroreflective substrates including a glass bead construction. Prismatic retroreflective substrates are especially preferred as the free radical curable inkjet inks are found to exhibit higher retroreflectivity than retroreflective substrates including a glass bead construction.

In a preferred embodiment, the retroreflective substrates have an adhesive back-layer containing a permanent pressure sensitive adhesive for application on aluminium and zinc coated steel plate. Such an adhesive layer facilitates the manufacturing of signs.

## Manufacturing Methods of Signs

A manufacturing process of signs comprising the inkjet printing method as described herein.

In a preferred embodiment of the manufacturing process of signs, the method includes a step of laminating a transparent film on the cured colour inkjet image. The advantage thereof is that not only the scratch resistance of the sign is improved, but also the light stability of the pigments in the cured image as the transparent film filters out UV light that is very harmful for bleaching pigments.

Suitable transparent films are readily available from commercial sources, such as Orafol® 5061, 5062 and 5051 from ORAFOL GmbH.

Signs

A sign in accordance with the present invention includes a cured layer of a free radical curable inkjet ink as described above.
The term "sign" as used herein refers to a stand-alone article that conveys information by means of alphanumeric characters, symbols and/or graphics, and that in use is mounted to an object such as a post, bracket or wall.

EXAMPLES

Materials

All materials used in the following examples were readily available from standard sources such as Aldrich Chemical Co. (Belgium) and Acros (Belgium) unless otherwise specified. Any water used was demineralized water.
**PV19** is C.I. Pigment Violet 19 for which Quindo Red 19 from RADIANT COLOR NV was used
**PO71** is C.I. Pigment Orange 71 for which Irgazin™ Orange D205 from BASF was used.
**PR122** is C.I. Pigment Red 122 for which PIGMENT RED 122 TCR12203IJ from TRUST CHEM EUROPE BV was used.
**SYN** is the dispersion aid according to Formula (A):

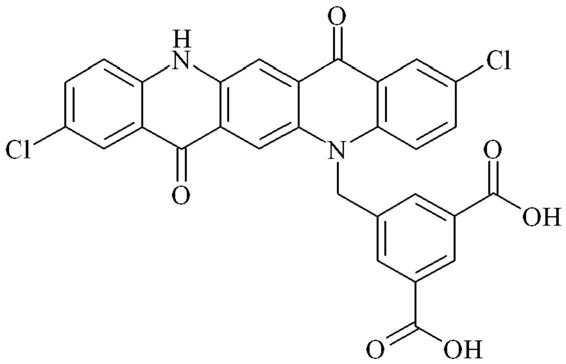

Formula (A),

and was synthesized in the same manner as described in Example 1 of WO 2007/060254 (AGFA GRAPHICS) for the synergist QAD-3.
**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolacton and toluene diisocyanate having an amine value of 13 mg KOH/g, a Mn of about 4,425 and a Mw of about 6,270.
**TMPTA** is trimethylolpropane triacrylate available as Sartomer® SR351 from ARKEMA.
**15EOT** is an ethoxylated (15) trimethylolpropane triacrylate containing fifteen ethoxy units having a molecular weight of 956 and available as Sartomer® SR9035 from SARTOMER.
**HDDA** is 1,6 hexanediol diacrylate available as Sartomer® SR238 from ARKEMA.
**MPDA** is 3-methyl-1,6-pentanediyl diacrylate available as Sartomer® SR341 from ARKEMA.
**THFA** IS tetrahydrofurfuryl acrylate available as Sartomer® SR285 from ARKEMA.
**DPGDA** is dipropyleneglycol diacrylate available as Laromer® DPGDA from BASF.
**IBOA** is isobornyl acrylate available as Sartomer® SR285 from ARKEMA.
**CTFA** is cyclic trimethylolpropane formal acrylate available as Sartomer® SR531 from ARKEMA.
**ACMO** is acryloyl morpholine from RAHN.
**NVC** is N-vinyl caprolactam available from BASF BELGIUM, NV.
**PEA** is 2-phenoxyethyl acrylate available as Sartomer® SR339C from ARKEMA.
**TBCH** is 4-tert.butylcyclohexylacrylate available under the trade name of Sartomer® SR217 from ARKEMA.
**VMOX** is a Vinyl methyl oxazolidinone (CAS No.: 3395-98-0) available as VMOX® from BASF.
**CN963** is a difunctional urethane diacrylate available as Sartomer® CN963B80 from ARKEMA.
**TPO** is 2,4,6-Trimethylbenzoyl-diphenyl-phosphineoxide available as Omnirad® TPO by IGM RESINS.
**BAPO** is bis(2,4,6-trimethylbenzoyl)-phenylphosphineoxide supplied as Omnirad™ 819 by IGM RESINS.

**ITX** is Omnirad™ ITX is an isomeric mixture of 2- and 4-isopropyl thioxanthone from IGM RESINS.

**UV3510** is a polyethermodified polydimethylsiloxane wetting agent available as BYK™ UV3510 from BYK CHEMIE GMBH.

**UV10** is 4-hydroxy-2,2,6,6-tetramethylpiperidinooxy sebacate available from Shanghai FINC Chemical Technology Co., Ltd..

**INHIB** is a mixture forming a polymerization inhibitor having a composition according to Table 2.

**Table 2**

| Component | wt% |
|---|---|
| DPGDA | 82.4 |
| p-methoxyphenol | 4.0 |
| BHT | 10.0 |
| Cupferron™ AL | 3.6 |

**BHT** is an abbreviation for 2,6-di-tert.butyl-4-methylphenol (CASRN128-37-0) from ALDRICH CHEMICAL CO.

**Cupferron™ AL** is aluminum N-nitrosophenylhydroxylamine from WAKO CHEMICALS LTD.

Measurement methods

1. Average particle size

The average particle size was determined with a Nicomp® 380 Submicron Particle Analyzer employing a 635 nm laser diode available from Particle Sizing Systems and is based upon the principle of dynamic light scattering. The free radical curable inkjet ink was diluted with ethyl acetate to a pigment concentration of 0.002 wt%.

2. Retroreflectivity

The coefficient of retroreflection RA (expressed in cd/m$^2$/lx) represents the ratio of the luminance (cd/m$^2$) to the illuminance (lx). The coefficient RA was determined using a Retrosign® GRX reflectometer from DELTA (Denmark) according to the norm EN12899 with an illumination angle of 5° and an observation angle of 0.33°. The latter simulates the viewing of a traffic sign at night by a standard car using tungsten lamps at a viewing distance of 100 m, wherein the tungsten lamps and the driver are 0.65 m respectively 1.20 m above the road.

3. Adhesion

A laminated sample is cut at the sides of a printed square with a cutter knife so that a laminated printed square can be removed from the laminated films. At a corner of the laminated printed square, the clear transparent film is delaminated from the printed retroreflective film. Good adhesion is obtained when no or almost no ink is present on the clear transparent film.

An adhesion score is given according to Table 3 by first manually laminating the clear transparent film on a white paper sheet and then determining the amount of ink visible.

**Table 3**

| Score | Observation |
|---|---|
| A | No or almost no ink visible (< 5 % of the surface area) |
| B | Minor parts of the inkjet ink layer was removed by the clear transparent film (5-30% of the surface area) |
| C | Major parts of the inkjet ink layer were removed by the clear transparent film (>30% of the surface area) |

EXAMPLE 1

This example illustrates the effect of the polymerizable composition on adhesion and reflectivity.

Preparation of Concentrated Pigment Dispersion CPR

The concentrated red pigment dispersion CPR was prepared by mixing its components according to Table 4 for 30 minutes using a DISPERLUX™ disperser from DISPERLUX S.A.R.L., Luxembourg. The dispersion was then milled using a Bachofen DYNOMILL ECM mill filled with 0.4 mm yttrium stabilized zirconia beads from TOSOH. The mixture was circulated over the mill for having a milling time of 53 minutes. After milling, the concentrated pigment dispersion was discharged over a 1 $\mu$m filter into a container.

**Table 4**

| wt% of: | CPR |
|---|---|
| PV19 | 4.09 |
| PO71 | 6.82 |
| PR122 | 4.09 |
| SYN | 0.84 |
| DB162 | 11.86 |
| INHIB | 1.00 |
| PEA | 71.30 |
| Total = | 100.00 |

Preparation of Inkjet Inks

The above prepared concentrated dispersion CPR was used to prepare the comparative free radical curable inkjet inks C-1 to C-11 according to Table 5 and the inventive free radical curable inkjet inks I-1 to I-15 according to Table 6 and Table 7.

**Table 5**

| wt% of: | C-1 | C-2 | C-3 | C-4 | C-5 | C-6 | C-7 | C-8 | C-9 | C-10 | C-11 |
|---|---|---|---|---|---|---|---|---|---|---|---|
| CPR | 25.94 | 25.94 | 25.94 | 25.94 | 25.94 | 25.94 | 25.94 | 25.94 | 25.94 | 25.94 | 25.94 |
| HDDA | | | | | 5.00 | 3.00 | | | | 0.50 | 0.00 |
| THFA | | | | | 23.00 | | | | | | |
| PEA | 10.44 | 2.52 | 0.00 | 10.44 | | 7.44 | 3.00 | 3.00 | 3.00 | 10.34 | 10.84 |
| CTFA | 27.96 | 27.96 | 27.96 | 27.96 | | 27.96 | 24.96 | 19.96 | 14.96 | 27.96 | 27.96 |
| TBCH | | | 9.10 | | | | | | | | |
| IBOA | 5.38 | 13.30 | 5.00 | 5.38 | 32.90 | 23.66 | 34.10 | 39.10 | 44.10 | 3.66 | 3.66 |
| NVC | 18.28 | | | 18.28 | | | | | | 19.60 | 19.60 |
| VMOX | | 18.28 | 20.00 | | | | | | | | |
| CN963 | | | | | 1.16 | | | | | | |
| TPO | 5.00 | 5.00 | 5.00 | 5.00 | 5.00 | 5.00 | 5.00 | 5.00 | 5.00 | 5.00 | 5.00 |
| BAPO | 2.90 | 2.90 | 2.90 | 2.90 | 2.90 | 2.90 | 2.90 | 2.90 | 2.90 | 2.90 | 2.90 |
| ITX | 3.00 | 3.00 | 3.00 | 3.00 | 3.00 | 3.00 | 3.00 | 3.00 | 3.00 | 3.00 | 3.00 |
| UV3510 | 0.75 | 0.75 | 0.75 | 0.75 | 0.75 | 0.75 | 0.75 | 0.75 | 0.75 | 0.75 | 0.75 |
| UV10 | 0.35 | 0.35 | 0.35 | 0.35 | 0.35 | 0.35 | 0.35 | 0.35 | 0.35 | 0.35 | 0.35 |

**Table 6**

| wt% of: | I-1 | I-2 | I-3 | I-4 | I-5 | I-6 | I-7 | I-8 |
|---|---|---|---|---|---|---|---|---|
| CPR | 25.94 | 25.94 | 25.94 | 25.94 | 25.94 | 25.94 | 25.94 | 25.94 |

(continued)

| wt% of: | I-1 | I-2 | I-3 | I-4 | I-5 | I-6 | I-7 | I-8 |
|---|---|---|---|---|---|---|---|---|
| 15EOT | | | | | | 3.00 | | |
| HDDA | 3.00 | 2.00 | 3.00 | 3.00 | | | | 3.00 |
| MPDA | | | | | | | 3.00 | |
| DPGDA | | | | | 3.00 | | | |
| PEA | 7.44 | 8.84 | 0.82 | 3.44 | 9.04 | 3.87 | 9.04 | 7.44 |
| CTFA | 27.96 | 27.96 | 27.96 | 33.34 | 27.96 | 27.96 | 27.96 | 27.96 |
| IBOA | 5.38 | 3.66 | 12.00 | | 3.78 | 8.95 | 3.78 | 5.38 |
| NVC | 18.28 | 19.60 | | 18.28 | 18.28 | 18.28 | 18.28 | 18.28 |
| VMOX | | | 18.28 | 4.00 | | | | |
| TPO | 5.00 | 5.00 | 5.00 | 5.00 | 5.00 | 5.00 | 5.00 | 5.00 |
| BAPO | 2.90 | 2.90 | 2.90 | 2.90 | 2.90 | 2.90 | 2.90 | 2.90 |
| ITX | 3.00 | 3.00 | 3.00 | 3.00 | 3.00 | 3.00 | 3.00 | 3.00 |
| UV3510 | 0.75 | 0.75 | 0.75 | 0.75 | 0.75 | 0.75 | 0.75 | 0.75 |
| UV10 | 0.35 | 0.35 | 0.35 | 0.35 | 0.35 | 0.35 | 0.35 | 0.35 |

**Table 7**

| wt% of: | I-9 | I-10 | I-11 | I-12 | I-13 | I-14 | I-15 |
|---|---|---|---|---|---|---|---|
| CPR | 25.94 | 25.94 | 25.94 | 25.94 | 25.94 | 25.94 | 25.94 |
| TMPTA | | 1.00 | | | | | |
| HDDA | 3.00 | | 2.00 | 1.75 | 1.50 | 1.25 | 1.00 |
| PEA | 7.44 | 8.44 | 8.84 | 9.09 | 9.34 | 9.59 | 9.84 |
| CTFA | 27.96 | 27.96 | 27.96 | 27.96 | 27.96 | 27.96 | 27.96 |
| IBOA | 15.38 | 6.38 | 3.66 | 3.66 | 3.66 | 3.66 | 3.66 |
| NVC | 8.28 | 18.28 | 19.60 | 19.60 | 19.60 | 19.60 | 19.60 |
| TPO | 5.00 | 5.00 | 5.00 | 5.00 | 5.00 | 5.00 | 5.00 |
| BAPO | 2.90 | 2.90 | 2.90 | 2.90 | 2.90 | 2.90 | 2.90 |
| ITX | 3.00 | 3.00 | 3.00 | 3.00 | 3.00 | 3.00 | 3.00 |
| UV3510 | 0.75 | 0.75 | 0.75 | 0.75 | 0.75 | 0.75 | 0.75 |
| UV10 | 0.35 | 0.35 | 0.35 | 0.35 | 0.35 | 0.35 | 0.35 |

The average particle size of all inkjet inks was measured and found to be in the range of 140 nm to 160 nm.

Evaluation and Results

A square of 10 cm x 10 cm was printed at 98% ink coverage with each inkjet ink on a retroreflective film Oralite® 9910 from ORAFOL Europe GmbH using a Anapurna® RTR3200i LED from AGFA NV. The inkjet printing was performed in the bidirectional printing mode N540x1080 Reverse, at UV setting 30% with a curing delay of 2.15 s on position 800mm by jetting 30pL droplets.

After the UV LED curing each printed sample was laminated with a clear transparent film Oralite® 5061 from ORAFOL Europe GmbH using a roll laminator EXCELAM® 1100RS from GMP at a temperature of 40°C and the pressure is manually set to the setting 1.5mil 36mic.

All the samples were evaluated for adhesion and retroreflectivity (RA). The results are given by Table 8. The heading "DBD" represents the double bond density of the polymerizable composition and "wt% Mono" represents the

weight percentage of monofunctional polymerizable compounds based on the total weight of the polymerizable composition.

Table 8

| Sample of Ink | wt% Mono | DBD | Adhesion | RA |
|---|---|---|---|---|
| **C-1** | 99.7% | 5,57 | A | 81 |
| **C-2** | 99.7% | 5,68 | A | 93 |
| **C-3** | 99.7% | 5,73 | A | 88 |
| **C-4** | 99.7% | 5,57 | A | 72 |
| **C-5** | 92.1% | 5,56 | C | 80 |
| **C-6** | 96.0% | 5,16 | A | 89 |
| **C-7** | 99.7% | 4,98 | B | 87 |
| **C-8** | 99.7% | 4,97 | B | 86 |
| **C-9** | 99.7% | 4,96 | B | 78 |
| **C-10** | 99.1% | 5,63 | A | 89 |
| **C-11** | 99.7% | 5,61 | A | 88 |
| **I-1** | 96.0% | 5,70 | A | 132 |
| **I-2** | 97.3% | 5,70 | A | 115 |
| **I-3** | 96.0% | 5,82 | A | 126 |
| **I-4** | 96.0% | 5,85 | A | 144 |
| **I-5** | 96.0% | 5,68 | A | 113 |
| **I-6** | 96.0% | 5,47 | A | 113 |
| **I-7** | 96.0% | 5,71 | A | 119 |
| **I-8** | 96.0% | 5,70 | A | 125 |
| **I-9** | 96.0% | 5,41 | A | 107 |
| **I-10** | 98.5% | 5,62 | A | 101 |
| **I-11** | 97.3% | 5,70 | A | 111 |
| **I-12** | 97.6% | 5,69 | A | 107 |
| **I-13** | 97.9% | 5,67 | A | 114 |
| **I-14** | 98.2% | 5,66 | A | 103 |
| **I-15** | 98.5% | 5,65 | A | 103 |

From Table 8, it should be immediately clear that only the signs printed with the inventive free radical curable inkjet inks exhibit a good adhesion and a retroreflectivity RA of more than 100 cd/lux/$m^2$.

**EXAMPLE 2**

This example illustrates the effect of the curing delay in inkjet printing on the retroreflectivity.

Evaluation and Results

The free radical curable inkjet ink I-11 was printed and laminated in the same way as in EXAMPLE 1 but having a short curing delay. The measured retroreflectivity (RA) is shown in Table 9.

Table 9

| Sample of Ink | Curing delay | RA |
|---|---|---|
| I-11 | 1.43 s | 106 |
| I-11 | 2.15 s | 111 |

From Table 9, it can be seen that the retroreflectivity is larger for a longer curing delay.

## Claims

1. A free radical curable inkjet ink containing a colour pigment and a polymerizable composition,

   wherein the colour pigment is a mixture of colour pigments including at least one colour pigment selected from a quinacridone pigment, a diketopyrrolo pyrrole pigment, and a mixed crystal thereof;
   wherein the average particle size of the colour pigment is between 80 nm and 240 nm as determined by a dynamic light scattering technique using a laser having an emission wavelength of 635 nm;
   wherein the polymerizable composition contains 95.0 to 99.0 wt% of monofunctional polymerizable compounds;
   wherein the monofunctional polymerizable compounds include a non-aromatic heterocyclic monofunctional monomer selected from the group consisting of N-vinyl caprolactam, acryloyl morpholine, cyclic trimethylolpropane formal acrylate and vinyl methyl oxazolidinone; and
   wherein the polymerizable composition has a double bond density DBD of at least 5.40 with the double bond density DBD being calculated by the formula:

$$\mathbf{DBD} = \frac{\sum_{i=1\text{ to }n}^{n} \frac{\mathbf{F(i) \times wt\%(i)}}{\mathbf{MW(i)}}}{\sum_{i=1\text{ to }n}^{n} \mathbf{wt\%(i)}}$$

   with:

   n representing the number of polymerizable compounds in the free radical curable inkjet ink;
   F(i) representing the functionality of the polymerizable compound i;
   MW(i) representing the molecular weight of the polymerizable compound i; and
   wt%(i) being the weight percentage of the polymerizable compound i based on the total weight of the polymerizable composition.

2. The free radical curable inkjet ink according to claim 1 containing a beta-copper phthalocyanine pigment.

3. The free radical curable inkjet ink according to claim 1 or 2 containing at least 7.0 wt% of an acylphosphine oxide photoinitiator based on the total weight of the free radical curable inkjet ink.

4. The free radical curable inkjet ink according to any one of claims 1 to 3 containing a carbon black pigment.

5. The free radical curable inkjet ink according to any one of claims 1 to 4, wherein the polymerizable composition contains 0 to 18.0 wt% of isobornyl acrylate and/or at least 13.0 wt% of the non-aromatic heterocyclic monofunctional monomer.

6. The free radical curable inkjet ink according to any one of claims 1 to 5 containing vinyl methyl oxazolidinone.

7. The free radical curable inkjet ink according to any one of claims 1 to 6 containing 2-phenoxyethyl acrylate.

8. The free radical curable inkjet ink according to claim 7, wherein 2-phenoxyethyl acrylate is present in an amount of 15.0 to 30.0 wt% based on the total weight of the inkjet ink.

9. The free radical curable inkjet ink according to any one of claims 1 to 8, wherein the polymerizable composition has a double bond density DBD of at least 5.60.

**10.** A free radical curable inkjet ink set including a free radical curable inkjet ink according to any one of claims 1 to 5.

**11.** An inkjet printing method comprising the steps of:

a) jetting a colour image with a free radical curable inkjet ink according to any one of claims 1 to 9 on a substrate; and
c) curing the jetted colour image by electron beam or by employing UV light emitting diodes.

**12.** The inkjet printing method according to claim 11, wherein there is UV curing delay of at least 1 second after jetting a droplet of the free radical curable inkjet ink.

**13.** The inkjet printing method according to claim 11 or 12, wherein the substrate is selected from the group consisting of retroreflective substrates having a prismatic air-backed or metalized construction and retroreflective substrates including a glass bead construction, preferably having an adhesive back-layer containing a permanent pressure sensitive adhesive for application on aluminium and zinc coated steel plate.

**Patentansprüche**

**1.** Eine durch freie Radikale härtbare Tintenstrahltinte, enthaltend ein Farbpigment und eine polymerisierbare Zusammensetzung, wobei das Farbpigment ein Gemisch aus Farbpigmenten ist, das mindestens ein Farbpigment, ausgewählt aus einem Chinacridonpigment, einem Diketopyrrolopyrrolpigment und einem Mischkristall derselben, enthält,

wobei die mittlere Partikelgröße des Farbpigments, wie bestimmt durch eine dynamische Lichtstreuungstechnik, bei der ein Laser mit einer Emissionswellenlänge von 635 nm verwendet wird, zwischen 80 nm und 240 nm liegt,
wobei die polymerisierbare Zusammensetzung zwischen 95,0 Gew.-% und 99,0 Gew.-% monofunktioneller polymerisierbarer Verbindungen enthält,
wobei die monofunktionellen polymerisierbaren Verbindungen ein nicht-aromatisches heterocyclisches monofunktionelles Monomer, ausgewählt aus der Gruppe bestehend aus N-Vinylcaprolactam, Acryloylmorpholin, cyclischem Trimethylolpropanformalacrylat und Vinylmethyloxazolidinon, enthalten, und
wobei die polymerisierbare Zusammensetzung eine Doppelbindungsdensität DBD von mindestens 5,40 aufweist, wobei die Doppelbindungsdensität DBD gemäß folgender Formel berechnet wird:

$$DBD = \frac{\sum_{i=1\ bis\ n}^{n} \frac{F(i)\ x\ Gew.-\%(i)}{MG(i)}}{\sum_{i=1\ bis\ n}^{n} Gew.-\%(i)}$$

in der:

n die Anzahl polymerisierbarer Verbindungen in der durch freie Radikale härtbaren Tintenstrahltinte bedeutet,
F(i) die Funktionalität der polymerisierbaren Verbindung i bedeutet,
MG(i) das Molekulargewicht der polymerisierbaren Verbindung i bedeutet, und
Gew.-%(i) den Gewichtsprozentsatz der polymerisierbaren Verbindung i, bezogen auf das Gesamtgewicht der polymerisierbaren Zusammensetzung, bedeutet.

**2.** Die durch freie Radikale härtbare Tintenstrahltinte nach Anspruch 1, enthaltend ein β-Kupferphthalocyaninpigment.

**3.** Die durch freie Radikale härtbare Tintenstrahltinte nach Anspruch 1 oder 2, enthaltend mindestens 7,0 Gew.-% eines Acylphosphinoxid-Fotoinitiators, bezogen auf das Gesamtgewicht der durch freie Radikale härtbaren Tintenstrahltinte.

**4.** Die durch freie Radikale härtbare Tintenstrahltinte nach einem der Ansprüche 1 bis 3, enthaltend ein Rußpigment.

**5.** Die durch freie Radikale härtbare Tintenstrahltinte nach einem der Ansprüche 1 bis 4, wobei die polymerisierbare Zusammensetzung zwischen 0 Gew.-% und 18,0 Gew.-% Isobornylacrylat und/oder mindestens 13,0 Gew.-% des

nicht-aromatischen heterocyclischen monofunktionellen Monomers enthält.

6. Die durch freie Radikale härtbare Tintenstrahltinte nach einem der Ansprüche 1 bis 5, enthaltend Vinylmethyloxazolidinon.

7. Die durch freie Radikale härtbare Tintenstrahltinte nach einem der Ansprüche 1 bis 6, enthaltend 2-Phenoxyethylacrylat.

8. Die durch freie Radikale härtbare Tintenstrahltinte nach Anspruch 7, wobei das 2-Phenoxyethylacrylat in einer Menge zwischen 15,0 Gew.-% und 30,0 Gew.-%, bezogen auf das Gesamtgewicht der Tintenstrahltinte, enthalten ist.

9. Die durch freie Radikale härtbare Tintenstrahltinte nach einem der Ansprüche 1 bis 8, wobei die polymerisierbare Zusammensetzung eine Doppelbindungsdensität DBD von mindestens 5,60 aufweist.

10. Ein Satz durch freie Radikale härtbarer Tintenstrahltinten, enthaltend eine durch freie Radikale härtbare Tintenstrahltinte nach einem der Ansprüche 1 bis 5.

11. Ein Tintenstrahldruckverfahren, das die folgenden Schritte umfasst:

a) Aufspritzen eines Farbbildes auf ein Substrat unter Verwendung einer durch freie Radikale härtbaren Tintenstrahltinte nach einem der Ansprüche 1 bis 9, und
c) Härten des aufgespritzten Farbbildes durch Elektronenstrahl oder mittels UV-Licht emittierender Dioden.

12. Das Tintenstrahldruckverfahren nach Anspruch 11, wobei nach Aufspritzen eines Tröpfchens der durch freie Radikale härtbaren Tintenstrahltinte eine Verzögerung der UV-Härtung von mindestens 1 Sekunde vorgesehen ist.

13. Das Tintenstrahldruckverfahren nach Anspruch 11 oder 12, wobei das Substrat aus der Gruppe bestehend aus retroreflektierenden Substraten mit einer prismatischen luftgetragenen oder metallisierten Konstruktion und retroreflektierenden Substraten mit einer Glasperlenkonstruktion, bevorzugt mit einer haftenden Rückschicht, die einen permanenten selbsthaftenden Klebstoff zur Anwendung auf Aluminium und verzinktem Stahlblech enthält, ausgewählt wird.

## Revendications

1. Encre pour jet d'encre durcissable par radicaux libres contenant un pigment de couleur et une composition polymérisable, **caractérisée en ce que** le pigment de couleur est un mélange de pigments de couleur contenant au moins un pigment de couleur choisi parmi un pigment de quinacridone, un pigment de dicétopyrrolopyrrole et un cristal mixte de ceux-ci, **caractérisée en ce que** la taille de particule moyenne du pigment de couleur, telle que déterminée par une technique de diffusion dynamique de la lumière dans laquelle est utilisé un laser ayant une longueur d'onde d'émission de 635 nm, est comprise entre 80 nm et 240 nm,

**caractérisée en ce que** la composition polymérisable contient entre 95,0% en poids et 99,0% en poids de composés polymérisables monofonctionnels,
**caractérisée en ce que** les composés polymérisables monofonctionnels contiennent un monomère monofonctionnel hétérocyclique non aromatique choisi parmi le groupe composé de N-vinylcaprolactame, de morpholine d'acryloyle, d'acrylate de triméthylolpropaneformal cyclique et d'oxazolidinone de méthyle vinylique, et
**caractérisée en ce que** la composition polymérisable présente une densité de liaison double DLD d'au moins 5,40, ladite densité de liaison double DLD étant calculée selon la formule suivante:

$$DLD = \frac{\sum_{i=1\ \text{à}\ n}^{n} \frac{F(i)\ x\ \%\ en\ poids(i)}{PM(i)}}{\sum_{i=1\ \text{à}\ n}^{n} \%\ en\ poids(i)}$$

où:

n représente le nombre de composés polymérisables dans l'encre pour jet d'encre durcissable par radicaux libres,
F(i) représente la fonctionnalité du composé polymérisable i, PM(i) représente le poids moléculaire du composé polymérisable i, et
% en poids(i) représente le pourcentage en poids du composé polymérisable i par rapport au poids total de la composition polymérisable.

**2.** Encre pour jet d'encre durcissable par radicaux libres selon la revendication 1 contenant un pigment de ß-phtalocyanine de cuivre.

**3.** Encre pour jet d'encre durcissable par radicaux libres selon la revendication 1 ou 2 contenant au moins 7,0% en poids d'un photo-initiateur d'oxyde d'acylphosphine par rapport au poids total de l'encre pour jet d'encre durcissable par radicaux libres.

**4.** Encre pour jet d'encre durcissable par radicaux libres selon l'une quelconque des revendications 1 à 3 contenant un pigment de noir de carbone.

**5.** Encre pour jet d'encre durcissable par radicaux libres selon l'une quelconque des revendications 1 à 4, **caractérisée en ce que** la composition polymérisable contient entre 0% en poids et 18,0% en poids d'acrylate d'isobornyle et/ou au moins 13,0% en poids du monomère monofonctionnel hétérocyclique non aromatique.

**6.** Encre pour jet d'encre durcissable par radicaux libres selon l'une quelconque des revendications 1 à 5 contenant de l'oxazolidinone de méthyle vinylique.

**7.** Encre pour jet d'encre durcissable par radicaux libres selon l'une quelconque des revendications 1 à 6 contenant de l'acrylate de 2-phénoxyéthyle.

**8.** Encre pour jet d'encre durcissable par radicaux libres selon la revendication 7, **caractérisée en ce que** l'acrylate de 2-phénoxyéthyle est contenu dans une quantité comprise entre 15,0% en poids et 30,0% en poids par rapport au poids total de l'encre pour jet d'encre.

**9.** Encre pour jet d'encre durcissable par radicaux libres selon l'une quelconque des revendications 1 à 8, **caractérisée en ce que** la composition polymérisable présente une densité de liaison double DLD d'au moins 5,60.

**10.** Ensemble d'encres pour jet d'encre durcissables par radicaux libres contenant une encre pour jet d'encre durcissable par radicaux libres selon l'une quelconque des revendications 1 à 5.

**11.** Procédé d'impression à jet d'encre comprenant les étapes consistant à:

a) projeter une image couleur sur un substrat en utilisant une encre pour jet d'encre durcissable par radicaux libres selon l'une quelconque des revendications 1 à 9, et
c) durcir l'image couleur projetée au moyen d'un faisceau électronique ou en utilisant des diodes émettant de la lumière UV.

**12.** Procédé d'impression à jet d'encre selon la revendication 11, **caractérisé en ce que**, après avoir projeté une gouttelette de l'encre pour jet d'encre durcissable par radicaux libres, le durcissement par rayonnement UV est retardé d'au moins 1 seconde.

**13.** Procédé d'impression à jet d'encre selon la revendication 11 ou 12, **caractérisé en ce que** le substrat est choisi parmi le groupe composé de substrats rétro-réfléchissants ayant une construction prismatique avec support d'air ou métallisée et de substrats rétro-réfléchissants ayant une construction de billes de verre, de préférence pourvue d'une couche dorsale adhésive contenant un auto-adhésif permanent pour être appliqué sur de l'aluminium et sur de la tôle d'acier galvanisée de zinc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1697471 A, VUTEK
- EP 1355999 A
- EP 1316434 A
- EP 3412738 A
- EP 1790698 A
- EP 1790696 A
- WO 2007060255 A
- EP 1790695 A
- US 4922004 A, MERCK
- EP 2161264 A
- EP 2199273 A, AGFA
- EP 2684876 A
- EP 1616920 A
- EP 1616899 A
- EP 2851402 A
- WO 2007060254 A, (AGFA GRAPHICS)


### Non-patent literature cited in the description


- **HERBST, WILLY et al.** Industrial Organic Pigments, Production, Properties, Applications. Wiley - VCH, 2004
- Polymer Handbook. Wiley-Interscience, 1999, vol. 1,2
- *CHEMICAL ABSTRACTS*, 3395-98-0
- *CHEMICAL ABSTRACTS*, N128-37-0